# EUROPÄISCHE PATENTSCHRIFT

(11) **EP 0 903 265 B1**
(45) Veröffentlichungstag und Bekanntmachung des Hinweises auf die Patenterteilung: **26.11.2003**
(21) Anmeldenummer: 98117534.2
(22) Anmeldetag: 16.09.1998
(51) Int. Cl.: B60R 19/34, F16F 7/12

(54) **Energieabsorptionsvorrichtung für ein Kraftfahrzeug**
Energy absorbing device for a vehicle
Dispositif absorbeur d'énergie pour un véhicule

(30) Priorität: 19.09.1997 DE 19741422
(43) Veröffentlichungstag der Anmeldung: 24.03.1999
(73) Patentinhaber: AUDI AG, 85045 Ingolstadt (DE)
(72) Erfinder: Blödel, Wolfgang, 85134 Stammham (DE); Haberer, Karl-Heinz, 85077 Manching (DE)
(74) Vertreter: Engelhardt, Harald

(56) Entgegenhaltungen:
- EP-A- 0 163 524
- DE-A- 2 120 479
- DE-A- 2 537 947
- JP-A- 50 132 624
- US-A- 3 866 367
- PATENT ABSTRACTS OF JAPAN vol. 010, no. 138 (M-480), 21. Mai 1986 (1986-05-21) & JP 60 260730 A (NIHON KENSETSU KIKAIKA KIYOUKAI;OTHERS: 01), 23. Dezember 1985 (1985-12-23)

## Beschreibung

Die Erfindung betrifft eine Energieabsorptionsvorrichtung für ein Kraftfahrzeug zur Absorption von Bewegungsenergie bei einem Aufprall nach dem Oberbegriff des Anspruchs 1.

In einem Kraftfahrzeug sind eine Vielzahl von Bauteilen für eine Absorption von Bewegungsenergie bei einem Aufprall ausgelegt. Grundsätzlich wird dazu bei einer Krafteinleitung Bewegungsenergie in Verformungsarbeit umgesetzt, wodurch solche Bauteile deformiert, insbesondere verkürzt werden.

Allgemein ist es beispielsweise bekannt, vordere Längsträger als Faltenbeulrohre oder Stülprohre auszubilden, die bei einem Frontalaufprall des Kraftfahrzeugs verkürzt und zur Energieabsorption zusammengefaltet werden. Bei einem schrägen Aufprall neigen diese Anordnungen jedoch zu einem seitlichen Ausknicken. Dadurch wird die Energieabsorptionswirkung bei einem schrägen Aufprall stark verringert, wobei die auftretenden Kraftspitzen zu unkontrollierbaren Verformungen am Fahrzeugrahmen führen können.

Aus der DE-OS 24 60 598 ist eine Stoßdämpfervorrichtung als Energieabsorptionsvorrichtung für ein Kraftfahrzeug bekannt, die teleskopartig aus einem Hohlträger und einem darin verschiebbar gelagerten Trägerprofil mit endseitigem Kolbenabschnitt aufgebaut ist. Der Kolbenabschnitt ist im Nicht-Aufprallzustand in einem Hohlträgerabschnitt mit großem Durchmesser formschlüssig gelagert, an den sich ein Hohlträgerabschnitt mit kleinerem Durchmesser anschließt. Bei einem Aufprall wird der Kolbenabschnitt in Teleskopachsenrichtung in den Hohlträgerabschnitt mit kleinerem Durchmesser verschoben, der dadurch unter Energieabsorption aufgeweitet wird. Die Energieabsorption findet hier somit durch plastische Verformung des Hohlträgers statt.

Ein ähnlicher Aufbau, allerdings unter Verwendung von Kunststoff ist aus der DE 39 30 137 A1 bekannt.

Aus der JP 60 121 147 A und der DE-AS 1 630 860 ist eine Energieabsorptionsvorrichtung bekannt, bei der zwei im Falle eines Aufpralls gegeneinander verschiebbare Profilteile miteinander verbunden sind. Dazu ist in einem Profilteil ein Schlitz ausgebildet. Dieser Schlitz weist abwechselnd einen breiten Schlitzabschnitt und einen engen Schlitzabschnitt auf, wobei im Nicht-Aufprallzustand in dem breiten Schlitzabschnitt eine fest an dem anderen Profilteil angeordnete Schraube mit ihrem Schaubenschaft formschlüssig aufgenommen ist. Im Falle eines Aufpralls schieben sich die beiden Profilteile dann ineinander, wobei die Engstellen der Schlitze unter Energieabsorption durch den Schraubenschaft aufgeweitet werden. Die Energieabsorption findet hier somit ebenfalls durch plastische Verformung statt.

Ein ähnlicher Aufbau ist auch aus der EP 0 556 667 B1 bekannt, bei der die beiden Profilteile zusätzlich über ein Zugbandprofilteil miteinander verbunden sind. Im Falle eines Aufpralls und einer daraus resultierenden relativen Verschiebung wird zur Energieabsorption gleichzeitig das Zugbandprofilteil gedehnt und damit auch plastisch verformt. Ein derartiger Aufbau mit einem Zugbandprofilteil ist allerdings kompliziert und nur aufwendig herzustellen.

Aus der DE-OS 1 803 534 und der DE-AS 16 80 029 ist eine Energieabsorptionsvorrichtung bekannt, die einen Profilträger und ein Deformationsprofil aufweist, die teleskopartig miteinander verbunden sind und sich in Teleskopachsenrichtung erstrecken. Der Profilträger als Teleskopbasisteil weist einen Aufnahmeraum für das Deformationsprofil auf, in dem ein Deformationsprofilende im Nicht-Aufprallzustand durch wenigstens ein Befestigungsmittel gegen eine Verschiebung des Deformationsprofils in Teleskopachsenrichtung in den Aufnahmeraum relativ zum Profilträger gehalten ist. Dabei durchdringt das wenigstens eine Befestigungsmittel die Wände des Profilträgers und des Deformationsprofils und ist an Profilträgerwandbereichen festlegbar.

Das Deformationsprofil ist hier durch Scherschrauben als Befestigungselemente im Aufnahmeraum des Profilträgers gehalten. Diese werden im Falle einer Kollision abgeschert, wodurch das Deformationsprofil in den Aufnahmeraum des Profilträgers einfahren kann. Da eine gute und ausreichende Energieabsorption lediglich mit Scherstiften alleine nicht möglich ist, müssen, wie dies bei der DE-AS 16 80 029 der Fall ist, im Aufnahmeraum zusätzlich noch plastisch verformbare Hilfsmittel, wie z.B. Schaumstoff oder Tellerscheiben, angeordnet werden. Die Energieabsorption findet hier somit durch das Abscheren von Scherstiften und ggf. durch plastische Verformung mittels weiterer Hilfsmittel statt.

Aus der EP 163 524 A ist eine gattungsgemäße Energieabsorptionsvorrichtung bekannt.

Energieabsorptionsvorrichtungen sollen grundsätzlich auch bei verschiedenen Aufprallsituationen gute Energieabsorptionseigenschaften aufweisen, so z.B. bei einem geraden oder einem schrägen Aufprall mit jeweils unterschiedlichen Kraftbelastungen. Es besteht daher auf diesem Gebiet das anhaltende Bestreben, neue Lösungen zu entwickeln und die Energieabsorptionsvorrichtungen auch für unterschiedliche Aufprallbedingungen zu optimieren.

Aufgabe der Erfindung ist es daher, eine Energieabsorptionsvorrichtung zu schaffen, die für unterschiedliche Aufprallsituationen auf einfache Weise eine gute Absorption von Bewegungsenergie ermöglicht.

Diese Aufgabe wird mit den Merkmalen des Anspruchs 1 gelöst.

Gemäß Anspruch 1 umfaßt das wenigstens eine Befestigungsmittel wenigstens im Wanddurchdringungsbereich des Deformationsprofils eine Schneidvorrichtung mit einer Schneide, die in Teleskopachsenrichtung von dem Profilträger weg zu dem Deformationsprofil hin ausgerichtet ist. Dadurch wird das Deformationsprofil bei einem Aufprall in Teleskopachsenrichtung relativ zu dem Profilträger auf die Schneide der Schneidvorrichtung zu in den Aufnahmeraum verschoben und von dieser unter gleichzeitiger Absorption der Stoßenergie eingeschnitten und unter Bildung eines Spaltes aufgepflügt. Zur Aufnahme des aufpflügbaren Spaltes ist dabei zwischen dem Profilträger und dem Deformationsprofil ein Freiraum vorgesehen.

Im Falle eines Aufpralls findet die Energieabsorption am Kraftfahrzeug hier somit durch Zerschneiden und Aufpflügen des Deformationsprofils, d.h. durch dessen Zerstörung mittels einer Schneidvorrichtung statt. Durch den Freiraum zwischen dem Profilträger und dem Deformationsprofil ist dabei sichergestellt, daß das aufgepflügte Deformationsprofil in den Aufnahmeraum einfahren kann, ohne daß dieses Einfahren durch einen Materialstau behindert oder blockiert wird. Mit einem derartigen Aufbau läßt sich eine optimale Energieabsorption erzielen, wobei eine ideale Kennung mit einem annähernd rechtwinkligen Kraft-Weg-Verlauf erreicht wird. Diese ideale Kennung bewirkt, daß keine unkontrollierbare Verformungen begünstigenden Kraftspitzen auftreten.

Da die Schneidvorrichtung ein Teil des Befestigungsmittels ist, dient das Befestigungsmittel in einer Doppelfunktion sowohl zur Verbindung des Deformationsprofils mit dem Profilträger als auch zur Absorption von Bewegungsenergie.

Diese Energieabsorptionsvorrichtung weist nicht nur bei einem geraden sondern auch bei einem schrägen Aufprall sehr gute Energieabsorptionseigenschaften auf. Aufgrund der bei einem schrägen Aufprall in Teleskoprichtung auf das Deformationsprofil wirkenden Axialkraftkomponente und der dadurch bewirkten Verschiebung des Deformationsprofils auf die Schneide der Schneidvorrichtung zu, wird das Deformationsprofil nämlich gleich zu Beginn des schrägen Aufpralls eingeschnitten. Dies ist auch dann der Fall, wenn die in Teleskopachsenrichtung wirkende Axialkraftkomponente kleiner ist als eine quer zur Teleskopachsenrichtung wirkende Querkraftkomponente, die grundsätzlich ein seitliches Ausknicken bewirken würde. Durch diesen sich in Teleskopachsenrichtung erstreckenden rißartigen Einschnitt ist die weitere Verschieberichtung des Deformationsprofils in den Aufnahmeraum des Profilträgers dann bereits vorgegeben, da ein derartiger Riß stets das Bestreben hat, sich in seine Längserstreckungsrichtung fortzupflanzen. Dadurch kann das Deformationsprofil auch bei gleichzeitigem Einwirken einer Axialkraftkomponente und einer Querkraftkomponente unter Zerschneidung der Deformationsprofilwände und Energieabsorption ohne seitliches Ausknicken gerichtet in den Aufnahmeraum einfahren, wodurch der Einfluß der Querkraftkomponente im wesentlichen ausgeschaltet wird.

Nach Anspruch 2 sind zur Halterung des Deformationsprofils in dem Profilträger wenigstens zwei Befestigungselemente mit Schneidvorrichtungen vorgesehen, die in Teleskopachsenrichtung beabstandet hintereinander angeordnet sind. Durch diese wenigstens zwei in Teleskopachsenrichtung hintereinander angeordneten Befestigungspunkte kann eine besonders vorteilhafte Energieabsorptionswirkung mittels dem Aufpflügen des Deformationsprofils an mehreren Stellen gleichzeitig erzielt werden. Zudem tragen mehrere Befestigungselemente zu einer zusätzlichen Versteifung des Aufbaus, z.B. gegen seitliches Ausknicken, bei.

In einer nach Anspruch 3 bevorzugten Ausführungsform ist das Befestigungsmittel eine herkömmliche Durchsteckschraube mit zugeordneter Durchsteckschraubenmutter, die die Wände des Profilträgers und des Deformationsprofils in etwa vertikal durchdringt und die auf an sich bekannte Weise zwischen den gegenüberliegenden Profilträgerwandbereichen verspannbar ist. Die Schneidvorrichtung ist hier als keilförmige Schiebehülse ausgebildet, die im auf den Schraubenschaft aufgeschobenen Zustand den Schraubenschaft der Durchsteckschraube wenigstens im Wanddurchdringungsbereich des Deformationsprofils formschlüssig ummantelt. Die Ausbildung der Schneidvorrichtung als keilförmige Schiebehülse, die lediglich auf den Schraubenschaft aufzuschieben ist, begünstigt eine einfache Montage. Zudem ist eine derartige Schiebehülse einfach herzustellen. Alternativ kann anstelle einer Schiebehülse mit Schneide die Schneide aber auch integral am Schaft ausgebildet sein.

Nach Anspruch 4 ist eine Formschlußverbindung für eine verdrehund/oder verschiebefeste Anordnung der keilförmigen Schiebehülse auf dem Schraubenschaft an der keilförmigen Schiebehülse und/oder am Schraubenschaft vorgesehen. Eine derartige Formschlußverbindung kann z. B. über eine Nut- und Federverbindung, eine Paßfederverbindung oder über eckige Geometrien auf einfache Weise hergestellt werden. Auch ein Verschweißen der Schiebehülse mit dem Schraubenschaft ist möglich. Eine derartige Verdreh- und Verschiebesicherung bewirkt, daß die Schneide der Schneidvorrichtung im Falle eines Aufpralls stets in Teleskopachsenrichtung zu dem Deformationsprofil hin ausgerichtet bleibt.

Nach Anspruch 5 bildet die keilförmige Schiebehülse im Querschnitt einen Kreisflächenabschnitt aus, an dessen Kreisabschnittsenden randseitig jeweils ein Keilschenkel angeschlossen ist, die zur Ausbildung einer Schneide unter einem spitzen Winkel zusammenlaufen. Die Durchgangsbohrung für den Schraubenschaft ist dabei bevorzugt in etwa mittig mit gleichem Abstand zu dem Kreisrand im Bereich des Kreisflächenabschnitts ausgebildet. Für eine gute Energieabsorption im Rahmen des Aufpflügens des Deformationsprofils ist eine Schneide zweckmäßig, die einerseits für einen geeigneten Widerstand zur Energieaufnahme nicht zu scharfkantig ausgebildet ist und andererseits aber auch nicht zu stumpf ausgebildet ist, um ein Zerschneiden des Deformationsprofils grundsätzlich zu ermöglichen. Nach Anspruch 6 weisen dazu die Keilschenkel zur Ausbildung der Schneide bevorzugt eine gleiche Länge auf und schließen einen Winkel zwischen 40° und 100°, bevorzugt von 70°, ein.

Nach Anspruch 7 ist der Profilträger als Längshohlträger, bevorzugt mit einem rechteckigen Profilquerschnitt, ausgebildet, wobei der vom Längshohlträger umschlossene Hohlraum den Aufnahmeraum für das Deformationsprofil bildet. Das Deformationsprofil ist als Längshohlprofil, bevorzugt als zylindrisches Deformationsrohr ausgebildet. Derartige Längshohlträger sind stets tragender Bestandteil einer jeden Karosserie und können somit in einer Doppelfunktion auf einfache Weise auch zusätzlich als Profilträger der Energieabsorptionsvorrichtung dienen. Ein zylindrisches Deformationsrohr ist besonders gut geeignet als Deformationsprofil, da es im Nicht-Aufprallzustand gute Tragwerkseigenschaften bei gleichzeitiger hoher Biegesteifigkeit aufweist und zum anderen im Falle eines Aufpralls für ein gerichtetes Einfahren unter Energieabsorption leicht zerschneidbar und aufpflügbar ist.

In einer bevorzugten Ausführungsform sind gemäß Anspruch 8 zwei Durchsteckschrauben als Befestigungselemente in Teleskopachsenrichtung beabstandet hintereinander angeordnet. Der Längshohlträger weist für jede der Durchsteckschrauben an gegenüberliegenden Wandflächen eine Bohrung mit gleichem Bohrungsdurchmesser zum formschlüssigen Durchstecken des Schraubenschafts auf. Zudem weist das Deformationsrohr ebenfalls an gegenüberliegenden Wandflächen je eine Bohrung auf, deren Durchmesser zur Aufnahme der verdrehfest auf den Schraubenschaft aufschiebbaren keilförmigen Schiebehülse größer ist als der der Längshohlträgerbohrungen.

Dabei ist zwischen den einzelnen zugeordneten Bohrungsbereichen des Längshohlträgers und des Deformationsrohres jeweils ein sich an der Innenfläche des Längshohlträgers und der Außenfläche des Deformationsrohres abstützendes Distanzelement angeordnet. Dieses Distanzelement, das bevorzugt eine Distanzscheibe ist, weist ebenfalls jeweils eine Bohrung zum formschlüssigen Durchstecken des Schraubenschafts auf, so daß das Deformationsrohrende in etwa mittig und beabstandet zu den Längshohlträgerwänden angeordnet ist. Die keilförmige Schiebehülse erstreckt sich dabei verschiebefest zwischen je zwei einer jeden Durchsteckschraube zugeordneten Distanzelementen und liegt wenigstens mit ihrer in Teleskopachsenrichtung ausgerichteten Schneide im Wandbereich der Deformationsrohrbohrungen an.

Mit einem derartigen Aufbau ergeben sich sehr gute Energieabsorptionseigenschaften.

Nach Anspruch 9 ist in einer konkreten und bevorzugten Ausführung wenigstens ein unterer Längsträger einer Fahrzeugkarosserie als Profilträger ausgebildet und das Deformationsprofil im Frontbereich und/oder Heckbereich der Fahrzeugkarosserie mit einem Anschlußelement eines Stoßfängers verbunden.

Anhand einer Zeichnung wird die Erfindung näher erläutert.

Es zeigen:
- Fig. 1: einen schematischen Längsschnitt durch eine mit einem Stoßfänger verbundene Energieabsorptionsvorrichtung im Frontbereich eines Kraftfahrzeugs,
- Fig. 2: einen Schnitt durch die Energieabsorptionsvorrichtung entlang der Linie A-A der Fig. 1, und
- Fig. 3: einen Schnitt durch die Energieabsorptionsvorrichtung entlang der Linie B-B der Fig. 1.

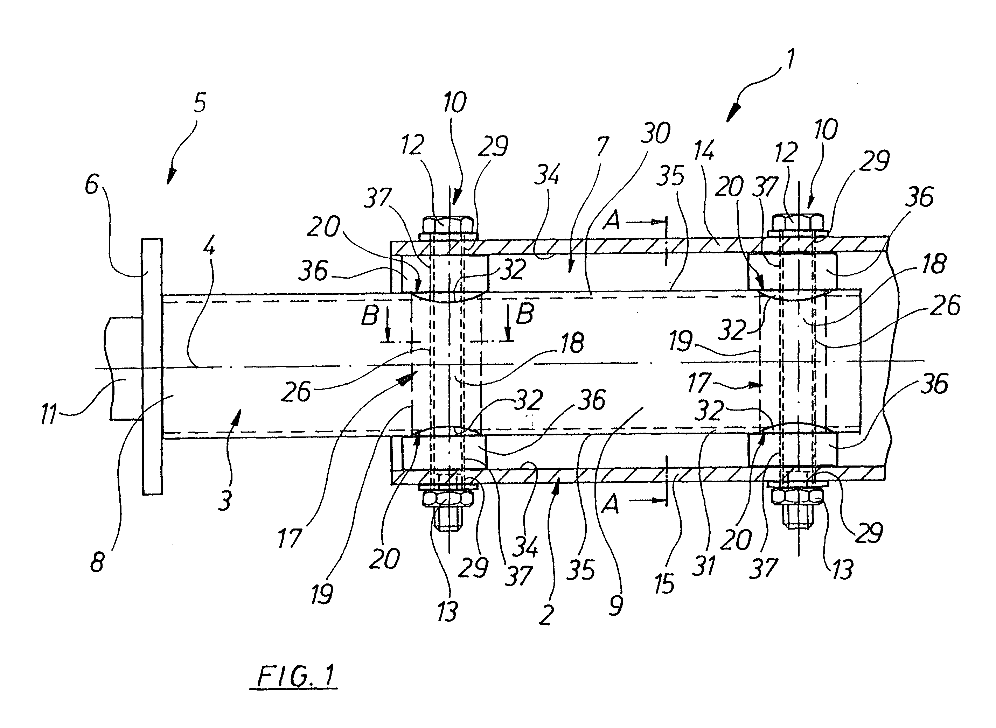

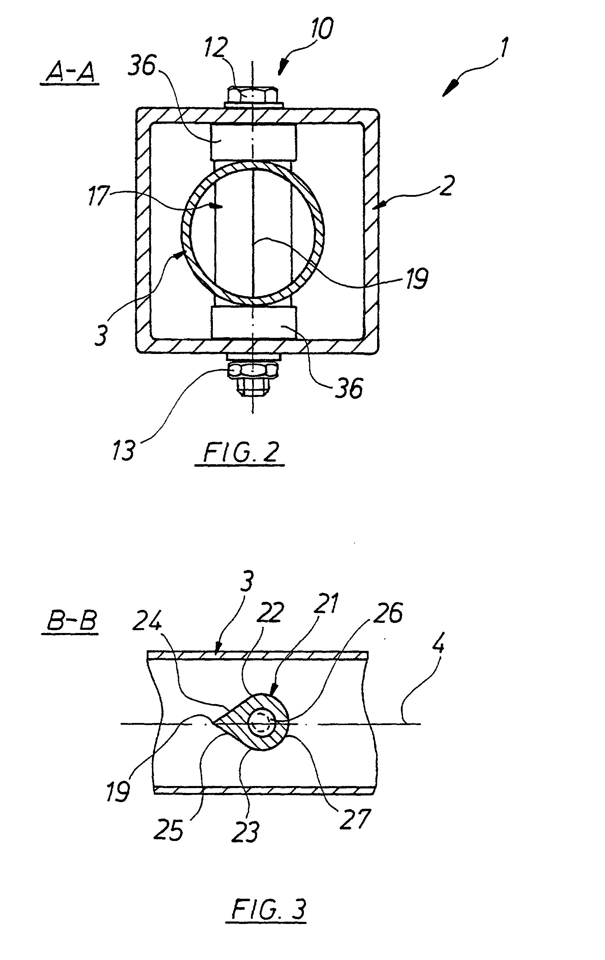

In der Fig. 1 ist eine Energieabsorptionsvorrichtung 1 für ein Kraftfahrzeug zur Absorption von Bewegungsenergie bei einem Aufprall in ihrem Nicht-Aufprallzustand dargestellt. Diese Energieabsorptionsvorrichtung 1 umfaßt einen unteren Längshohlträger 2 einer Fahrzeugkarosserie als Profilträger und ein Deformationsrohr 3 als Deformationsprofil, die teleskopartig miteinander verbunden sind und sich in Richtung der Teleskopachse 4 erstrecken. Wie dies aus der Fig. 2 ersichtlich ist, weist der Längshohlträger 2 als Teleskopbasisteil einen rechteckigen Querschnitt auf und ist das Deformationsrohr 3 ein zylindrisches Rohrprofil.

Das Deformationsrohr 3 ist mit einem ersten Deformationsrohrende 8 im Frontbereich des Fahrzeugs mit einem Anschlußelement 6 eines hier nur teilweise dargestellten Stoßfängers 11 verbunden.

Der von dem Längshohlträger 2 eingeschlossene Hohlraum bildet einen Aufnahmeraum 7 für das Deformationsrohr 3 aus. In diesem Aufnahmeraum 7 ist ein zweites Deformationsrohrende 9 durch zwei in Teleskopachsenrichtung beabstandet hintereinander angeordnete Befestigungsmittel 10 mit einem Freiraum zwischen dem Längshohlträger 2 und dem Deformationsrohr 3 gehalten. Dadurch kann im Nicht-Aufprallzustand keine Verschiebung des Deformationsrohres 3 in Teleskopachsenrichtung in den Aufnahmeraum 7 relativ zum Längshohlträger 2 erfolgen.

Jedes der zwei Befestigungsmittel 10 umfaßt eine Durchsteckschraube 12 mit entsprechend zugeordneter Durchsteckschraubenmutter 13. Diese Durchsteckschraube 12 durchdringt die Wände des Längshohlträgers 2 und des Deformationsrohres 3 vertikal zur Teleskopachsenrichtung und ist, wie dies aus den Fig. 1 und 2 ersichtlich ist, zwischen jeweils gegenüberliegenden Längshohlträgerwandbereichen 14, 15 auf an sich bekannte Weise verspannt.

Die Befestigungsmittel 10 umfassen ferner eine keilförmige Schiebehülse 17 als Schneidvorrichtung. Diese keilförmige Schiebehülse 17 weist eine in Teleskopachsenrichtung von dem Längshohlträger 2 weg zu dem Deformationsrohr 3 hin ausgerichtete Schneide 19 auf, die im Wanddurchdringungsbereich 20 des Deformationsrohres 3 anliegt, wie dies insbesondere aus den Fig. 2 und 3 hervorgeht.

Im in der Fig. 3 dargestellten Querschnitt weist die keilförmige Schiebehülse 17 einen Kreisflächenabschnitt 21 auf, an dessen Kreisabschnittsenden 22, 23 randseitig jeweils ein Keilschenkel 24, 25 angeschlossen ist. Diese Keilschenkel 24, 25 weisen eine gleiche Länge auf und laufen zur Ausbildung der Schneide 19 unter einem spitzen Winkel zusammen. Der Winkel liegt für eine optimale Energieabsorption bei ca. 70°. Dabei ist im Bereich des Kreisflächenabschnitts 21 in etwa mittig mit gleichem Abstand zu einem Kreisrand 27 des Kreisflächenabschnitts 21 eine Durchgangsbohrung 26 für den Schraubenschaft 18 der Durchsteckschraube 12 ausgebildet.

Diese Durchgangsbohrung 26 ist so ausgebildet, daß die keilförmige Schiebehülse 17 den Schraubenschaft 18 der Durchsteckschraube 12 im aufgeschobenen Zustand formschlüssig ummantelt. Für eine verdreh- und/oder verschiebefeste Anordnung der keilförmigen Schiebehülse 17 auf dem Schraubenschaft 18 ist diese im montierten Zustand mit dem Schraubenschaft fest verbunden, was hier jedoch nicht dargestellt ist. Eine derartige feste Verbindung kann beispielsweise durch Schweißen oder eine andere Formschlußverbindung hergestellt sein, z.B. über eine Nut- und Federverbindung, eine Paßfederverbindung oder über eckige Geometrien.

Der Längshohlträger 2 weist für jede der Durchsteckschrauben 12 an den gegenüberliegenden Längshohlträgerwandbereichen 14, 15 eine in der Fig. 1 lediglich strichliert dargestellte Bohrung 29 mit gleichem Bohrungsdurchmesser zum formschlüssigen Durchstecken des Schraubenschaftes 18 auf. Entsprechend weist das Deformationsrohr 3 ebenfalls an gegenüberliegenden Wandflächen 30, 31 je eine den Längshohlträgerbohrungen 29 entsprechend zugeordnete Bohrung 32 auf. Der Durchmesser dieser Deformationsrohrbohrungen 32 ist dabei größer als der der Längshohlträgerbohrungen 29 ausgebildet, um darin den Schraubenschafts 18 samt keilförrniger Schiebehülse 17 aufnehmen zu können. Diese Deformationsrohrbohrungen 32 sind so dimensioniert, daß die Schneide 19 und der der Schneide 19 gegenüberliegende Bereich des Kreisflächenabschnitts 21 jeweils am Wanddurchdringungsbereich 20 des Deformationsrohres 3 anliegen.

Zwischen den einzelnen zugeordneten Bohrungsbereichen des Längshohlträgers 2 und des Deformationsrohres 3 ist jeweils ein sich an der Innenfläche 34 des Längshohlträgers 2 und der Außenfläche 35 des Deformationsrohres 3 abstützende Distanzscheibe 36 angeordnet. Diese Distanzscheiben 36 weisen ebenfalls eine in der Fig. 1 lediglich strichliert dargestellte Bohrung 37 zum formschlüssigen Durchstecken des Schraubenschafts 18 auf. Dadurch ist das in den Aufnahmeraum 7 ragende zweite Deformationsrohrende 9 des Deformationsrohres 3 mittig und beabstandet zu den Längshohlträgerwandbereichen 14, 15 angeordnet. Die keilförmige Schiebehülse 17 erstreckt sich dabei zwischen je zwei einer jeden Durchsteckschraube 12 zugeordneten Distanzscheiben 36.

Im Falle eines Aufpralls, insbesondere auch bei einem schrägen Aufprall, und einer über den Stoßfänger 11 und das Anschlußelement 6 eingeleiteten Kraft wird das Deformationsrohr 3 dann in Teleskopachsenrichtung relativ zu dem Längshohlträger 2 auf die Schneide 19 der keilförmigen Schiebehülse 17 zu verschoben und von dieser unter gleichzeitiger Absorption der Stoßenergie eingeschnitten und aufgepflügt. Dabei wird der aufpflügbare Spalt des Deformationsrohres 3 im Freiraum zwischen dem Längshohlträger 2 und dem Deformationsrohr 3 aufgenommen. Insgesamt ergibt sich mit einem derartigen Aufbau eine optimale Energieabsorption mit einem annähernd rechtwinkligen Kraft-Weg-Verlauf.

## Patentansprüche

1. Energieabsorptionsvorrichtung für ein Kraftfahrzeug zur Absorption von Bewegungsenergie bei einem Aufprall,
mit einem Profilträger und einem Deformationsprofil, die teleskopartig miteinander verbunden sind und sich in Teleskopachsenrichtung erstrecken,
wobei der Profilträger als Teleskopbasisteil einen Aufnahmeraum für das Deformationsprofil aufweist, in dem ein Deformationsprofilende im Nicht-Aufprallzustand durch wenigstens ein Befestigungsmittel gegen eine Verschiebung des Deformationsprofils in Teleskopachsenrichtung in den Aufnahmeraum relativ zum Profilträger gehalten ist, und
wobei das wenigstens eine Befestigungsmittel die Wände des Profilträgers und des Deformationsprofils durchdringt und an Profilträgerwandbereichen festlegbar ist,
**dadurch gekennzeichnet,**
**daß** das wenigstens eine Befestigungsmittel (10) wenigstens im Wanddurchdringungsbereich (20) des Deformationsprofils (3) eine Schneidvorrichtung (17) mit einer Schneide (19) umfaßt, die in Teleskopachsenrichtung von dem Profilträger (2) weg zu dem Deformationsprofil (3) hin ausgerichtet ist, dergestalt,
**daß** das Deformationsprofil (3) bei einem Aufprall in Teleskopachsenrichtung relativ zu dem Profilträger (2) auf die Schneide (19) der Schneidvorrichtung (17) zu in den Aufnahmeraum (7) verschoben und von dieser unter gleichzeitiger Absorption der Bewegungsenergie eingeschnitten und unter Bildung eines Spaltes aufgepflügt wird, und
**daß** zwischen dem Profilträger (2) und dem Deformationsprofil (3) ein Freiraum zur Aufnahme des aufpflügbaren Spaltes vorgesehen ist.

2. Energieabsorptionsvorrichtung nach Anspruch 1, **dadurch gekennzeichnet, daß** zur Halterung des Deformationsprofils (3) in dem Profilträger (2) wenigstens zwei Befestigungselemente (10) mit Schneidvorrichtungen (17) vorgesehen sind, die in Teleskopachsenrichtung beabstandet hintereinander angeordnet sind.

3. Energieabsorptionsvorrichtung nach Anspruch 1 oder 2, **dadurch gekennzeichnet,**
**daß** das Befestigungsmittel (10) eine Durchsteckschraube (12) mit Durchsteckschraubenmutter (13) umfaßt, die die Wände (14, 15, 30, 31) des Profilträgers (2) und des Deformationsprofils (3) in etwa vertikal zur Teleskopachsenrichtung durchdringt und auf an sich bekannte Weise zwischen gegenüberliegenden Profilträgerwandbereichen (14, 15) verspannbar ist, und
**daß** die Schneidvorrichtung (17) als keilförmige Schiebehülse ausgebildet ist, die im auf den Schraubenschaft (18) aufgeschobenen Zustand den Schraubenschaft (18) der Durchsteckschraube (12) wenigstens im Wanddurchdringungsbereich (20) des Deformationsprofils (3) formschlüssig ummantelt.

4. Energieabsorptionsvorrichtung nach Anspruch 3, **dadurch gekennzeichnet, daß** eine Formschlußverbindung für eine verdreh- und/oder verschiebefeste Anordnung der keilförmigen Schiebehülse (17) auf dem Schraubenschaft (18) an der keilförmigen Schiebehülse (17) und/oder am Schraubenschaft (18) vorgesehen ist.

5. Energieabsorptionsvorrichtung nach Anspruch 3 oder 4, **dadurch gekennzeichnet, daß** die keilförmige Schiebehülse (17) im Querschnitt einen Kreisflächenabschnitt (21) umfaßt, an dessen Kreisabschnittsenden (22, 23) randseitig jeweils ein Keilschenkel (24, 25) angeschlossen ist, die zur Ausbildung der Schneide (19) unter einem spitzen Winkel zusammenlaufen, wobei im Bereich des Kreisflächenabschnitts (21), bevorzugt in etwa mittig mit gleichem Abstand zu dem Kreisrand (27), eine Durchgangsbohrung (26) für den Schraubenschaft (18) ausgebildet ist.

6. Energieabsorptionsvorrichtung nach Anspruch 5, **dadurch gekennzeichnet, daß** die Keilschenkel (24, 25) zur Ausbildung der Schneide (19) eine gleiche Länge aufweisen und einen Winkel zwischen 40° und 100°, bevorzugt von 70°, einschließen.

7. Energieabsorptionsvorrichtung nach einem der Ansprüche 1 bis 6, **dadurch gekennzeichnet,**
**daß** der Profilträger als Längshohlträger (2), bevorzugt mit einem rechteckigen Profilquerschnitt, ausgebildet ist und der vom Längshohlträger (2) umschlossene Hohlraum den Aufnahmeraum (7) für das Deformationsprofil (3) bildet, und
**daß** das Deformationsprofil (3) als Längshohlprofil, bevorzugt als zylindrisches Deformationsrohr, ausgebildet ist.

8. Energieabsorptionsvorrichtung nach Anspruch 7, **dadurch gekennzeichnet,**
**daß** zwei Durchsteckschrauben (12) als Befestigungselemente in Teleskopachsenrichtung beabstandet hintereinander angeordnet sind,
**daß** der Längshohlträger (2) für jede der Durchsteckschrauben (12) an gegenüberliegenden Wandflächen (14, 15) eine Bohrung (29) mit gleichem Bohrungsdurchmesser zum formschlüssigen Durchstecken des Schraubenschaftes (18) aufweist,
**daß** das Deformationsrohr (3) ebenfalls an gegenüberliegenden Wandflächen (30, 31) je eine den Längshohlträgerbohrungen (29) entsprechend zugeordnete Bohrung (32) aufweist, deren Durchmesser zur Aufnahme des Schraubenschafts (18) samt verdrehfest auf den Schraubenschaft (18) aufschiebbarer keilförmiger Schiebehülse (17) als Schneidvorrichtung größer ist als der der Längshohlträgerbohrungen (29),
**daß** zwischen den einzelnen zugeordneten Bohrungsbereichen (29, 32) des Längshohlträgers (2) und des Deformationsrohres (3) zur Bildung des Freiraumes jeweils ein sich an der Innenfläche (34) des Längshohlträgers (2) und der Außenfläche (35) des Deformationsrohres (3) abstützendes Distanzelement (36), bevorzugt eine Distanzscheibe angeordnet ist, die ebenfalls jeweils eine Bohrung (37) zum formschlüssigen Durchstecken des Schraubenschafts (18) aufweist dergestalt,
**daß** das im Nicht-Aufprallzustand in den Aufnahmeraum (7) ragende Deformationsrohrende (9) in etwa mittig und beabstandet zu den Längshohlträgerwänden angeordnet ist und sich die keilförmige Schiebehülse (17) zwischen je zwei einer jeden Durchsteckschraube (12) zugeordneten Distanzelementen (36) verschiebefest erstreckt und wenigstens mit ihrer in Teleskopachsenrichtung ausgerichteter Schneide (19) im Wandbereich der Deformationsrohrbohrungen (32) anliegt.

9. Energieabsorptionsvorrichtung nach einem der Ansprüche 1 bis 8, **dadurch gekennzeichnet, daß** wenigstens ein unterer Längsträger (2) einer Fahrzeugkarosserie als Profilträger ausgebildet ist und das Deformationsprofil (3) im Frontbereich und/oder Heckbereich der Fahrzeugkarosserie mit einem Anschlußelement (6) eines Stoßfängers (11) verbunden ist.

## Claims

1. Energy absorbing device for a motor vehicle, for absorbing kinetic energy in the event of a collision,
comprising a profile member and a deformation profile which are joined together in the manner of a telescope and extend in the direction of the telescope axis,
the profile member featuring as the telescope base section a locating compartment for the deformation profile, in which in a non-collision state one end of the deformation profile is held relative to the profile member by at least one fixing means against displacement of the deformation profile in the direction of the telescope axis into the locating compartment, and
the at least one fixing means passes through the walls of the profile member and of the deformation profile and is adapted to be fixed to portions of the profile member's wall,
**characterised in that**
at least in the area (20) where it passes through the walls of the deformation profile (3), the at least one fixing means (10) comprises a cutting mechanism (17) having a cutting edge (19) which in the direction of the telescope axis is aligned away from the profile member (2) and towards the deformation profile (3), such that
in the event of a collision in the direction of the telescope axis, the deformation profile (3) is displaced relative to the profile member (2) against the cutting edge (19) of the cutting mechanism (17) into the locating compartment (7) and is incised by the latter, at the same time as absorbing the kinetic energy, and is ploughed up to form a gap, and a space to accommodate the ploughing-up up gap is provided between the profile member (2) and the deformation profile (3).

2. Energy absorbing device according to claim 1, **characterised in that** at least two fixing elements (10) with cutting mechanisms (17) are provided, spaced one behind the other in the direction of the telescope axis, to retain the deformation profile (3) in the profile member (2).

3. Energy absorbing device according to claim 1 or 2, **characterised in that**
the fixing means (10) comprises a through-bolt (12) with through-bolt nut (13) which passes through the walls (14, 15, 30, 31) of the profile member (2) and of the deformation profile (3), more or less perpendicularly to the direction of the telescope axis, and can be tensioned between opposing profile member wall areas (14, 15) in a manner known *per se*, and
the cutting mechanism (17) is in the form of a cuneiform sliding sleeve which in the condition that it is pushed onto the barrel (18) of the bolt sheathes the barrel (18) of the through-bolt (12) in a positive manner, at least in the area (20) where the walls of the deformation profile (3) are penetrated.

4. Energy absorbing device according to claim 3, **characterised in that** a positive closure for an anti-rotation and/or anti-displacement arrangement of the cuneiform sliding sleeve (17) along the barrel of the bolt (18) is provided on the cuneiform sliding sleeve (17) and/or on the barrel of the bolt (18).

5. Energy absorbing device according to claim 3 or 4, **characterised in that** in cross-section the cuneiform sliding sleeve (17) comprises a circular surface section (21), peripherally attached to each of whose circular sectional ends (22, 23) is a respective cuneiform limb (24, 25), said limbs converging at an acute angle to form the cutting edge (19), and formed in the region of the circular surface section (21), preferably more or less centrally at the same distance from the edge of the circle (27), is a through-hole (26) for the barrel of the bolt (18).

6. Energy absorbing device according to claim 5, **characterised in that** the cuneiform limbs (24, 25) for forming the cutting edge (19) are identical in length and enclose an angle of between 40° and 100°, preferably 70°.

7. Energy absorbing device according to any of claims 1 to 6, **characterised in that**
the profile member is configured as a hollow side member (2), preferably with a rectangular profile cross-section, and the cavity surrounded by the hollow side member (2) forms the locating compartment (7) for the deformation profile (3), and
the deformation profile (3) is configured as a hollow side member, preferably as a cylindrical deformation tube.

8. Energy absorbing device according to claim 7, **characterised in that**
two through-bolts (12) are spaced one behind the other in the direction of the telescope axis to act as fixing elements,
for each of the through-bolts (12) the hollow side member (2) features a bore (29) of identical bore diameter on opposing wall surfaces (14, 15), for positive insertion of the barrel of the bolt (18),
likewise on opposing walls surfaces (30, 31) the deformation tube (3) features a respective bore (32), correspondingly operatively associated with each of the hollow side member bores (29), the diameter of which bore (32) is greater than that of the hollow side member bores (29) in order to accommodate the barrel of the bolt (18) together with the cuneiform sliding sleeve (17) acting as a cutting mechanism, which is adapted to be pushed onto the barrel of the bolt (18) in a manner locking it against rotation,
arranged between the individual operatively asssociated bore areas (29, 32) of the hollow side member (2) and of the deformation tube (3) to form the gap is a spacing element (36), preferably a spacing disc, which rests against the inner surface (34) of the hollow side member (2) and the outer surface (35) of the deformation tube (3), said spacer likewise featuring a bore (37) for positive insertion of the barrel of the bolt (18), such that
the deformation tube end (9) which in a non-collision state projects into the locating compartment (7) is arranged more or less centrally and spaced apart from the hollow side member walls, and the cuneiform sliding sleeve (17) extends in a manner locked against displacement between a respective two spacing elements (36) operatively associated with each through-bolt (12), and rests in the wall region of the deformation tube bores (32), at least by its cutting edge (19) aligned in the direction of the telescope axis.

9. Energy absorbing device according to any of claims 1 to 8, **characterised in that** at least one lower side member (2) of a vehicle body is configured as a profile member and in the front and/or rear zone of the vehicle body the deformation profile (3) is joined to a connecting element (6) of a bumper (11).

## Revendications

1. Dispositif absorbeur d'énergie pour un véhicule automobile, pour absorber l'énergie cinétique en cas d'impact,
avec un support de profilé et un profil de déformation, reliés ensemble de façon télescopique et s'étendant dans la direction de l'axe de l'assemblage télescopique,
le support de profilé présentant, en tant que partie de base télescopique, un espace de logement pour le profilé de déformation, dans lequel une extrémité de profilé de déformation, à l'état de non impact, est maintenue dans l'espace de logement par rapport au support de profilé par au moins un moyen de fixation contre tout déplacement du profilé de déformation dans la direction axiale télescopique, et
le au moins un moyen de fixation traversant les parois du support de profilé et du profilé de déformation et étant susceptible d'être fixé sur des zones de paroi de support de profilé,
**caractérisé en ce que**
le au moins un moyen de fixation (10) comprend, au moins dans une zone de traversée de paroi (20) du profilé de déformation (3), un dispositif de découpage (17) muni d'un tranchant (19) qui, dans la direction de l'axe de mouvement télescopique, est orienté en s'écartant du support de profilé (2) et en allant vers le profilé de déformation (3), de manière que
le profilé de déformation (3), en cas d'impact, soit déplacé dans la direction de l'axe de mouvement télescopique par rapport au support de profilé (2) sur le tranchant (19) du dispositif de découpage (17) vers l'espace de logement (7) et soit entaillé par ce tranchant, avec absorption simultanée d'énergie cinétique, et soit ouvert par un effet de labourage avec formation d'un interstice, et
**en ce qu'**entre le support de profilé (2) et le profil de déformation (3) est prévu un espace libre pour recevoir l'interstice provenant de l'ouverture par un effet de labourage.

2. Dispositif absorbeur d'énergie selon la revendication 1, **caractérisé en ce que**, pour assurer la fixation du profilé de déformation (3) dans le support de profilé (2), sont prévus au moins deux éléments de fixation (10) munis de dispositifs de découpage (17), disposés l'un derrière l'autre et à distance en observant dans la direction axiale du système télescopique.

3. Dispositif absorbeur d'énergie selon la revendication 1 ou 2, **caractérisé en ce que**
le moyen de fixation (10) comprend une vis traversante (22), avec un écrou pour vis traversante (13), qui traverse les parois (14, 15, 30, 31) du support de profilé (2) et du profilé de déformation (3), la traversée se faisant à peu près verticalement par rapport à l'axe télescopique, et qui est susceptible d'être serrée, de manière connue en soi, entre des zones de paroi de support de profilé (14, 15) opposées, et
**en ce que** le dispositif de découpage (17) est réalisé sous la forme de douille coulissante cunéiforme qui, à l'état enfilé sur la tige de vis (18), enveloppe, avec une liaison à ajustement de forme, la tige de vis (18) de la vis traversante (12), au moins dans la zone de traversée de paroi (20) du profilé de déformation (3).

4. Dispositif absorbeur d'énergie selon la revendication 3, **caractérisé en ce qu'**une liaison à ajustement de forme est prévue pour un agencement, bloqué en rotation et/ou en coulissement, de la douille coulissante (17) cunéiforme sur la tige de vis (18), sur la douille coulissante (17) cunéiforme et/ou sur la tige de vis (18).

5. Dispositif absorbeur d'énergie selon la revendication 3 ou 4, **caractérisé en ce que** la douille coulissante (17) cunéiforme, observée en coupe transversale, a une section en surface circulaire (21), aux extrémités de section circulaire (22, 23) de laquelle est chaque fois raccordée une branche de coin (24, 25) qui, pour former le tranchant (19), est réalisée sous un angle aigu, où, dans la zone du tronçon de surface circulaire (21), un trou traversant (26) pour la tige de vis (18) est réalisé, de préférence à peu près centralement sous le même espacement par rapport à la bordure de cercle (27).

6. Dispositif absorbeur d'énergie selon la revendication 5, **caractérisé en ce que** les branches de coin (24, 25) présentent, pour réaliser le tranchant (19), une longueur identique et font un angle compris entre 40° et 100°, de préférence de 70°.

7. Dispositif absorbeur d'énergie selon l'une des revendications 1 à 6,
**caractérisé en ce que**
le support de profilé est réalisé sous la forme de longeron creux (2), de préférence avec une section transversale de profil rectangulaire, et l'espace creux, entouré par le longeron creux (2), forme l'espace de logement (7) pour le profil de déformation (3), et
le profil de déformation (3) est réalisé sous la forme de profilé creux longitudinal, de préférence sous la forme d'un tube à déformation, cylindrique.

8. Dispositif absorbeur d'énergie selon la revendication 7, **caractérisé en ce que**
deux vis traversantes (12), faisant office d'élément de fixation, sont disposées l'une derrière l'autre à distance dans la direction de l'axe télescopique,
**en ce que** le longeron creux (2) pour chaque vis traversante (12) présente, sur des faces de paroi (14, 15) opposées, un perçage (29) ayant un diamètre de perçage identique, pour l'enfichage, avec liaison à ajustement de forme, de la tige de vis (18),
**en ce que** le tube de déformation (3) présente également, sur les faces de paroi (30, 31) opposées, chaque fois un perçage (32), associé de manière correspondante au perçage de longeron creux (29), perçage (32) dont le diamètre, pour recevoir la tige de vis (18) avec la douille coulissante (17) cunéiforme, pouvant être enfilée de façon assujettie en rotation sur la tige de vis (18), la douille coulissante faisant office de dispositif de découpage, est supérieur à celui des perçages de longeron creux (29),
**en ce que**, entre les zones de perçage (29, 32) associées individuelles du longeron creux (2) et du tube de déformation (3), pour former l'espace creux, est chaque fois disposé un élément d'espacement (36), offrant le soutien, prenant appui sur la face intérieure (34) du longeron creux (2) et de la face extérieure (35) du tube de déformation (3), de préférence une rondelle d'espacement, qui, chaque fois, présente un perçage (37) pour le passage avec ajustement de forme de la tige de vis (18), de manière que
l'extrémité de tube de déformation (9), pénétrant dans l'espace de logement (7) à l'état de non impact, est disposé à peu près centralement et à distance des parois de longeron creux, et la douille coulissante (17) cunéiforme s'étend, immobilisée en coulissement, chaque fois entre deux éléments d'espacement (36) associés à chaque vis traversante (12) et appuyant, au moins par son tranchant (19), aligné dans la direction axiale télescopique, dans la zone de paroi des perçages de tube de déformation (32).

9. Dispositif absorbeur d'énergie selon l'une des revendications 1 à 8, **caractérisé en ce qu'**au moins un longeron inférieur (2) d'une carrosserie de véhicule est réalisé sous la forme de support de profilé et le profil de déformation (3) étant relié, dans la zone avant et/ou la zone arrière de la carrosserie du véhicule, à un élément de raccordement (6) d'un pare-chocs (11).
